(19) **Europäisches Patentamt**
**European Patent Office**
**Office européen des brevets**

(11) **EP 2 874 319 B1**

(12) **EUROPEAN PATENT SPECIFICATION**

(45) Date of publication and mention
of the grant of the patent:
**09.05.2018 Bulletin 2018/19**

(51) Int Cl.:
***H04B 1/525*** (2015.01)

(21) Application number: **13823477.8**

(86) International application number:
**PCT/CN2013/076652**

(22) Date of filing: **03.06.2013**

(87) International publication number:
**WO 2014/015711 (30.01.2014 Gazette 2014/05)**

(54) **TRANSCEIVER AND INTERFERENCE CANCELLATION METHOD**

SENDER-EMPFÄNGER UND VERFAHREN ZUR INTERFERENZUNTERDRÜCKUNG

ÉMETTEUR-RÉCEPTEUR ET PROCÉDÉ D'ANNULATION D'INTERFÉRENCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.07.2012 CN 201210259674**

(43) Date of publication of application:
**20.05.2015 Bulletin 2015/21**

(73) Proprietor: **Huawei Technologies Co., Ltd.
Longgang District
Shenzhen, Guangdong 518129 (CN)**

(72) Inventors:
• **MAO, Mengda**
  **Shenzhen**
  **Guangdong 518129 (CN)**
• **YE, Siqing**
  **Shenzhen**
  **Guangdong 518129 (CN)**
• **YIN, Qian**
  **Shenzhen**
  **Guangdong 518129 (CN)**
• **PU, Tao**
  **Shenzhen**
  **Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**EP-A1- 1 813 030        CN-A- 101 114 840
CN-A- 102 571 655        CN-A- 102 811 069
JP-A- 2011 082 854        US-A1- 2004 198 295
US-A1- 2005 226 353      US-B2- 7 756 480**

## Description

### TECHNICAL FIELD

The present invention relates to the field of wireless communications technologies, and in particular, to a transceiver and an interference cancellation method.

### BACKGROUND

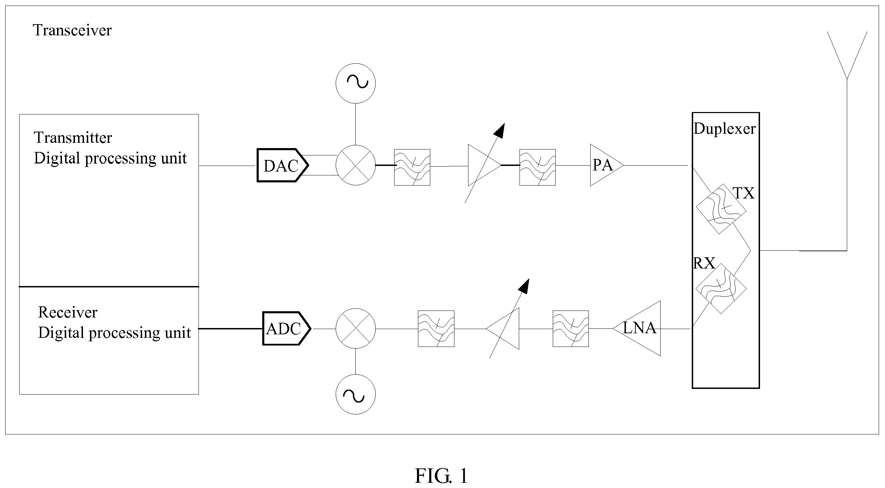

A base station is a basic device of a wireless network device. A base station device generally includes three parts: a base station control unit, a receiving device, and a transmitting device, where the receiving device and the transmitting device are collectively called a transceiver. FIG. 1 is a schematic diagram of basic composition of an existing transceiver with frequency division duplexing and different receiving and transmitting frequencies.

For example, US 2005/0226353 A1 refers to a wireless communication system comprising two or more antennas that interfere with one another via free space coupling, surface wave crosstalk, dielectric leakage, or other interference effect. The interference effect can produce an interference signal on one of the antennas. A cancellation device can suppress antenna interference by generating an estimate of the interference signal and subtracting the estimate from the interference signal. The cancellation device can generate the estimate based on sampling signals on an antenna that generates the interference or on an antenna that receives the interference. The cancellation device can comprise a model of the crosstalk effect. Transmitting test signals on the communication system can define or refine the model.

Further, EP 1 813 030 A0 refers to an adaptive filter suitable for fabrication on an RF integrated circuit and used for transmit (TX) leakage rejection in a wireless full-duplex communication system is described. The adaptive filter includes a summer and an adaptive estimator. The summer receives an input signal having a TX leakage signal and an estimator signal having an estimate of the TX leakage signal, subtracts the estimator signal from the input signal, and provides an output signal having the TX leakage signal attenuated. The adaptive estimator receives the output signal and a reference signal having a version of the transmit signal, estimates the TX leakage signal in the input signal based on the output signal and the reference signal, and provides the estimator signal. The adaptive estimator may utilize an LMS algorithm to minimize a mean square error between the TX leakage signal in the input signal and the TX leakage signal estimate in the estimator signal.

Further, US 2004/0198295 A1 refers to a method and apparatus for noise cancellation in communications systems. The method is applicable in situations where an interfering signal or noise must be cancelled within a specified bandwidth. A sample of the interfering signal is used to synthesize a cancellation signal which is of equal amplitude but opposite phase to the original interference signal. Introduction of the cancellation signal into the interference signal path results in substantially complete suppression of the interference signal through vector subtraction of the superposed signal fields. Adaptive cancellation is also provided in that the frequency and bandwidth of the cancellation signal can be controlled. The adaptive nature of the cancellation loop also tracks out imbalances between the interference and cancellation signals caused by temperature variation and component tolerances.; The adaptive nature of the cancellation system also allows the system to lock onto and track an interfering signal.

A transmitting device generally includes the following units: a transmitter digital processing unit, a digital to analog converter (Digital to Analog Converter, DAC), an inverter, a filter, and a power amplifier (Power Amplifier, PA), and the like. A receiving device generally includes the following units: a receiver digital processing unit, an analog to digital converter (Analog to Digital Converter, ADC), an inverter, a filter, and a low noise amplifier (Low Noise Amplifier, LNA), and the like.

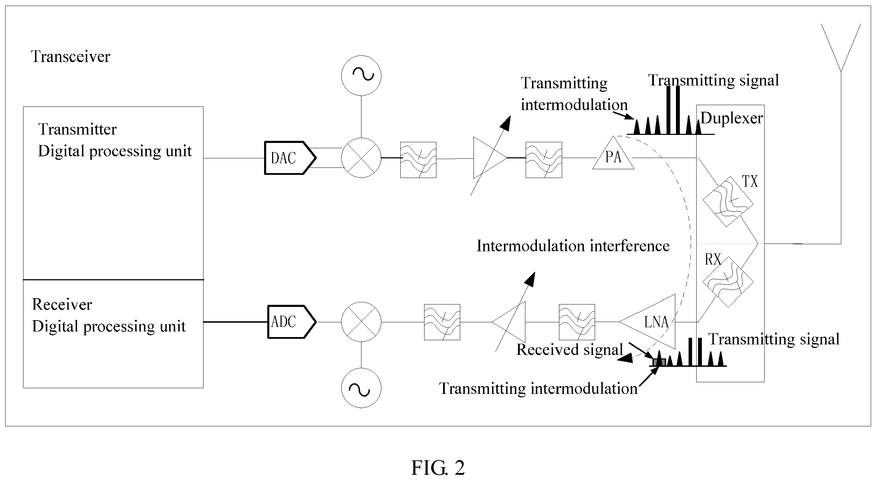

When a transmitting signal includes two or more frequencies, another may occur in an output signal because nonlinearity exists in a transmitting system, and if the another frequency falls right in a frequency range of a received signal, interference is directly superposed on the signal. At present, interference is generally suppressed in a duplexer by using a transmitting filter and a receiving filter. However, if a degree of suppression performed by the duplexer is not large enough, the receiver encounters interference, as shown in FIG. 2. In the schematic diagram shown in FIG. 2, for a transmitting signal (which is a rectangular signal on a transmitting path in the schematic diagram of the figure), a transmitting intermodulation signal (which is a triangle signal on either side of the transmitting signal in the schematic diagram of the figure) is generated due to a nonlinearity problem of the transmitting path. The transmitting intermodulation signal is transmitted to a receiving path by coupling of a duplexer, and the transmitting intermodulation signal falls on a received signal (as shown in figure, the received signal is on the left side of the transmitting signal, a rectangular signal with a lower amplitude is used to indicate the received signal, and the transmitting intermodulation signal shown as a triangle is mingled in the position of the received signal). It can be seen from the schematic diagram that when the transmitting intermodulation signal and the received signal are superposed, a transmitting filter of the duplexer is required to perform filtering on the transmitting intermodulation signal, thereby achieving suppression of the transmitting intermodulation signal.

However, the degree of suppression performed by the transmitting filter (which is shown as a TX filter above the duplexer in FIG. 2) of the duplexer affects a size and weight of the duplexer, thereby affecting an entire base station.

## SUMMARY

Embodiments of the present invention provide a transceiver and an interference cancellation method, so that interference cancellation can be adaptively implemented by using a cancellation path, which is a path formed by an injection signal path and a cancellation module, thereby implementing miniaturization of a base station device under a condition of decreased interference.

According to one aspect, an embodiment of the present invention provides a transceiver, where the transceiver includes a transceiver digital processing unit, a transmitting path, a receiving path, an injection path, a duplexer, and a cancellation module, where
the transceiver digital processing unit is configured to generate a transmitting signal, an injection signal, and a control signal, and obtain a received signal, where the control signal is used to adjust a transmission parameter of the cancellation module according to the received signal;

the transmitting path is configured to output, to the duplexer, the transmitting signal generated by the transceiver digital processing unit;
the receiving path is configured to input, to the transceiver digital processing unit, the received signal from the duplexer;
the injection path is configured to output, to the cancellation module and the duplexer, the injection signal generated by the transceiver digital processing unit; and

the cancellation module is configured to perform, according to the control signal, cancellation processing on the signal that is output to the duplexer by the transmitting path and the signal that is output by the injection path, to obtain a cancellation signal, and input the cancellation signal to the receiving path, wherein the cancellation module comprises a filter and an amplitude and phase modulator, wherein the filter is configured to perform filtering on a signal that is input to the cancellation module to obtain a signal within a transmitting intermodulation interference frequency band; and
the amplitude and phase modulator is configured to perform, according to control of the control signal, cancellation processing on a signal filtered by the filter, to obtain the cancellation signal, so that the cancellation signal and a transmitting intermodulation interference signal that is coupled to the receiving path through the duplexer have a same phase but opposite amplitude,
wherein the transceiver digital processing unit comprises a control signal generating module, which is configured to: when the cancellation module is connected between the transmitting path and the receiving path, generate the control signal according to a signal that is output by the receiving path, and adaptively adjust the control signal according to a value of the signal that is output by the receiving path,
wherein the control signal comprises an amplitude modulation signal and a phase modulation signal; the control signal generating module is configured to generate the amplitude modulation signal and the phase modulation signal;
the amplitude modulation signal is used to adjust an amplitude of the amplitude and phase modulator when phase adjustment of the amplitude and phase modulator is fixed, so that a polar coordinate vector of B/A is located on a circle that is centered at (1, 0°) and with a radius of 1; and
the phase modulation signal is used to: after the foregoing adjustment is performed on the amplitude of the amplitude and phase modulator, adjust a phase of the amplitude and phase modulator when amplitude adjustment of the amplitude and phase modulator is fixed, so that the polar coordinate vector of B/A approaches the origin of polar coordinates, wherein

$$A = h_{tx\_inject}(t) * h_{dup}(t) * h_{rx}(t),$$

and

$$B = h_{tx\_inject}(t) * h_{rx}(t) * (h_{dup}(t) + h_{canceller}(t)),$$

wherein
$h_{tx\_inject}(t)$ indicates a transfer function of the injection path after the injection signal is injected; $h_{rx}(t)$ indicates a transfer function of the receiving path; $h_{dup}(t)$ indicates a suppression function of the duplexer on transmitting intermodulation; and $h_{canceller}(t)$ indicates a transfer function of the cancellation module.

According to another aspect, an embodiment of the present invention further provides an interference cancellation method, applied to a transceiver, where the method includes:

generating, by a transceiver digital processing unit of the transceiver, a transmitting signal, where the transmitting signal is output to a duplexer of the transceiver by a transmitting path of the transceiver;

generating, by the transceiver digital processing unit, an injection signal, where the injection signal is output to the duplexer by an injection path of the transceiver;

receiving, by the transceiver digital processing unit, a received signal from the duplexer through a receiving path of the transceiver;

generating, by the transceiver digital processing unit, a control signal; and

performing, according to the control signal, cancellation processing on the signal that is output to the duplexer by the transmitting path and the signal that is output by the injection path, to obtain a cancellation signal, and inputting the cancellation signal to the receiving path, wherein the performing, according to the control signal, cancellation processing on the signal that is output to the duplexer by the transmitting path and the signal that is output by the injection path, to obtain the cancellation signal comprises:

performing filtering on a signal that is input to the cancellation module, to obtain a signal within a frequency band of transmitting intermodulation interference; and

performing, according to control of the control signal, cancellation processing on a signal obtained by filtering, to obtain the cancellation signal, so that the cancellation signal and a transmitting intermodulation interference signal that is coupled to the receiving path by the duplexer have a same phase but opposite amplitude,

wherein the generating, by the transceiver digital processing unit, a control signal comprises:

when the cancellation module is connected between the transmitting path and the receiving path, generating the control signal according to a signal that is output by the receiving path and adaptively adjusting the control signal according to a value of the signal that is output by the receiving path,

wherein the control signal comprises an amplitude modulation signal and a phase modulation signal, and the cancellation module comprises an amplitude and phase modulator;

the amplitude modulation signal is used to adjust an amplitude of the amplitude and phase modulator when phase adjustment of the amplitude and phase modulator is fixed, so that a polar coordinate vector of B/A is located on a circle that is centered at $(1,0°)$ and with a radius of 1; and

the phase modulation signal is used to, after the foregoing adjustment is performed on the amplitude of the amplitude and phase modulator, adjust a phase of the amplitude and phase modulator when amplitude adjustment of the amplitude and phase modulator is fixed, so that the polar coordinate vector of B/A approaches the origin of polar coordinates, wherein

$$A = h_{tx\_inject}(t) * h_{dup}(t) * h_{rx}(t),$$

and

$$B = h_{tx\_inject}(t) * h_{rx}(t) * (h_{dup}(t) + h_{canceller}(t)),$$

wherein

$h_{tx\_inject}(t)$ indicates a transfer function of the injection path after the injection signal is injected; $h_{rx}(t)$ indicates a transfer function of the receiving path; $h_{dup}(t)$ indicates a suppression function of the duplexer on transmitting intermodulation; and $h_{canceller}(t)$ indicates a transfer function of the cancellation module.

In the embodiments of the present invention, a cancellation module is added to an existing transceiver, where the cancellation module is located between a transmitting path and a receiving path and performs automatic adjustment on a cancellation effect of the cancellation module according to an injection signal received through the receiving path; thereby not only implementing adaptive cancellation of transmitting intermodulation interference signal, but also avoiding increasing size of a duplexer and obviously increasing size and weight of the entire transceiver.

**BRIEF DESCRIPTION OF DRAWINGS**

To describe the technical solutions in the embodiments of the present invention or in the prior art more clearly, the following briefly introduces the accompanying drawings required in the embodiments or in the prior art. Apparently, the accompanying drawings in the following description show merely some embodiments of the present invention, and a person of ordinary skill in the art may still derive other drawings from these accompanying drawings without creative efforts.

FIG. 1 is a schematic structural diagram of an existing transceiver;

FIG. 2 is a schematic diagram of generation of transmitting intermodulation interference in an existing transceiver;

FIG. 3 is a schematic structural diagram of a transceiver according to an embodiment of the present invention;

FIG. 4a is a schematic diagram of a specific situation of a relationship between a polar coordinate vector of B/A before amplitude and phase adjustment is performed and a circle that is centered at (1, 0°) and with a radius of 1 according to an embodiment of the present invention;

FIG. 4b is a schematic diagram of another specific situation of a relationship between a polar coordinate vector of B/A before amplitude and phase adjustment is performed and a circle that is centered at (1, 0°) and with a radius of 1 according to an embodiment of the present invention;

FIG. 5a is a schematic diagram of adjusting, under a situation of FIG. 4a, a polar coordinate vector of B/A to a circle that is centered at (1, 0°) and with a radius of 1;

FIG. 5b is a schematic diagram of adjusting, under a situation of FIG. 4b, a polar coordinate vector of B/A to a circle that is centered at (1, 0°) and with a radius of 1;

FIG. 6a is a schematic diagram of adjusting, under a situation of FIG. 5a, a polar coordinate vector of B/A to approach the origin of polar coordinates;

FIG. 6b is a schematic diagram of adjusting, under a situation of FIG. 5b, a polar coordinate vector of B/A to approach the origin of polar coordinates;

FIG. 7 is a schematic flowchart of an interference cancellation method according to an embodiment of the present invention;

FIG. 8 is a schematic structural diagram of a transceiver according to another embodiment of the present invention; and

FIG. 9 is a schematic flowchart of an interference cancellation method according to another embodiment of the present invention.

**DESCRIPTION OF EMBODIMENTS**

The following clearly and completely describes technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In a technical solution of the present invention, interference cancellation of a transmitting intermodulation signal is implemented by using a cancellation module; and at the same time, it is taken into consideration that a duplexer constantly changes with a change of an ambient temperature in actual system application. Therefore, in the solution of the present invention, interference cancellation modeling and system cancellation effect determining are performed by using an injection signal so as to implement adaptive interference cancellation of a cancellation module.

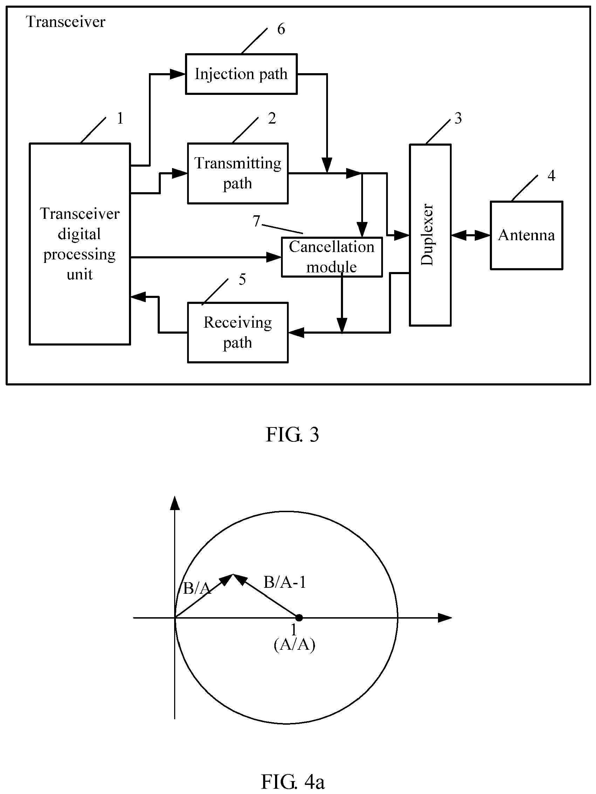

FIG. 3 is a schematic diagram of specific composition of a transceiver according to an embodiment of the present invention. The transceiver includes a transceiver digital processing unit 1, a transmitting path 2, a receiving path 5, an injection path 6, a duplexer 3, and a cancellation module 7. Certainly, the transceiver may further include an antenna 4 that is connected to the duplexer 3.

The transceiver digital processing unit 1 is configured to generate a transmitting signal, an injection signal, and a control signal, and obtain a received signal, where the control signal is used to adjust a transmission parameter of the cancellation module 7 according to the received signal. A frequency band of the injection signal includes a frequency band of the received signal, and the injection signal may specifically be a multi-tone signal or a random signal.

The transmitting path 2 is configured to output, to the duplexer 3, the transmitting signal generated by the transceiver digital processing unit 1.

The receiving path 5 is configured to input, to the transceiver digital processing unit 1, the received signal from the duplexer 3.

The injection path 6 is configured to output, to the cancellation module 7 and the duplexer 3, the injection signal generated by the transceiver digital processing unit 1.

The cancellation module 7 is configured to perform, according to the control signal, cancellation processing on the signal that is output to the duplexer 3 by the transmitting path 2 and the signal that is output by the injection path 6, to obtain a cancellation signal, and input the cancellation signal to the receiving path 5.

Certainly, the foregoing adjustment is performed when the transceiver works normally. Therefore, the signal input to the duplexer 3 and the cancellation module 7 further includes transmitting intermodulation interference, which is no longer described one by one subsequently.

The cancellation module 7 includes a filter and an amplitude and phase modulator, where the filter is configured to perform filtering on a signal that is input to the cancellation module 7, to obtain a signal within a frequency band of the transmitting intermodulation interference; and the amplitude and phase modulator is configured to perform, according to control of the control signal, cancellation processing on a signal filtered by the filter, to obtain the cancellation signal, so that the cancellation signal and a transmitting intermodulation interference signal that is coupled to the receiving path 5 by the duplexer 3 have a same phase but opposite amplitudes.

Further, the transceiver may further include a switch submodule, where the switch submodule is configured to: according to control of the transceiver digital processing unit 1, connect the cancellation module 7 between the transmitting path 2 and the receiving path 5, or disconnect the cancellation module 7 from the transmitting path 2 and the receiving path 5. The switch submodule may be a switch at a connection side of the cancellation module 7 and the transmitting path 2 or may be a switch at a connection side of the cancellation module 7 and the receiving path 5. The cancellation module 7 in the embodiment of the present invention may be an analog cancellation module or may be a digital cancellation module.

In this embodiment, although the cancellation module 7 has a filter, that is, a filter is added to the transceiver, this type of filter does not need to ensure that a transmitting signal is not attenuated while performing suppression on an interference signal, as a transmitting filter of the duplexer 3 does. Therefore, the filter in the cancellation module 7 may be obtained by combining simpler filters as long as the filter can obtain a signal of a specific frequency band by filtering; and it is not required to take into consideration an impact on whether a signal of another frequency band is reserved. To sum up, adding such a filter does not obviously increases weight and a scale of the transceiver.

Further, the transceiver digital processing unit 1 may further include a control signal generating module, which is configured to generate, after the cancellation module 7 is connected, the control signal according to a signal that is output by the receiving path 5, and adaptively adjust the control signal according to a value of the signal that is output by the receiving path 5.

When adaptive adjustment is performed on the cancellation module 7, adaptive adjustment may be performed on the amplitude and phase modulator included in the cancellation module 7, so as to implement adaptive adjustment on the cancellation signal that is output by the cancellation module 7. The amplitude and phase modulator may be configured to perform, according to the control of the control signal, cancellation processing on a signal of the cancellation module 7 to obtain the cancellation signal. Further, the control signal generating module is configured to generate an amplitude modulation signal and a phase modulation signal. Therefore, the control signal includes the amplitude modulation signal and the phase modulation signal, so that, during specific adjustment, adjustment may be separately performed on amplitude and a phase of the output cancellation signal.

The amplitude modulation signal is used to adjust an amplitude of the amplitude and phase modulator when phase adjustment of the amplitude and phase modulator is fixed, so that a polar coordinate vector of B/A is located on a circle that is centered at (1, 0°) and with a radius of 1.

The phase modulation signal is used to: after the foregoing adjustment is performed on the amplitude of the amplitude and phase modulator, adjust a phase of the amplitude and phase modulator when amplitude adjustment of the amplitude and phase modulator is fixed, so that the polar coordinate vector of B/A approaches the origin of polar coordinates, where

$$A = h_{tx\_inject}(t) * h_{dup}(t) * h_{rx}(t),$$

and

$$B = h_{tx\_inject}(t) * h_{rx}(t) * (h_{dup}(t) + h_{canceller}(t)),$$

where

$h_{tx\_inject}(t)$ indicates a transfer function of the injection path 2 after the injection signal is injected; $h_{rx}(t)$ indicates a transfer function of the receiving path 5; $h_{dup}(t)$ indicates a suppression function of the duplexer 3 on transmitting intermodulation; and $h_{canceller}(t)$ indicates a transfer function of the cancellation module 7.

It is described herein that, by using the foregoing adjustment mechanism, after a transfer function of the transmitting filter of the duplexer 3 is changed caused by a temperature change of the duplexer 3,, that adjustment on the cancellation module may be adaptively performed on the cancellation module 7, so that relatively excellent cancellation of the transmitting intermodulation interference is implemented. Through the calculation formulas of A and B, it can be understood that B/A has the following result:

$$\frac{B}{A} = \frac{h_{tx\_inject}(t) * h_{rx}(t) * (h_{dup}(t) + h_{canceller}(t))}{h_{tx\_inject}(t) * h_{rx}(t) * h_{dup}(t)} = \frac{h_{dup}(t) + h_{canceller}(t)}{h_{dup}(t)}$$

If $h_{dup}(t) + h_{canceller}(t) = 0$, it indicates that a signal that is coupled to the receiving path 5 by using the cancellation module 7 (transfer function) and the transmitting intermodulation interference signal coupled to the receiving path 5 by the duplexer 3 have a same phase but opposite amplitude. In this way, the transmitting intermodulation signal, after being coupled to the receiving path 5 by using the duplexer 3, may be canceled by the signal coupled to the receiving path 5 by using the cancellation module 7, that is, relatively excellent interference suppression can be implemented.

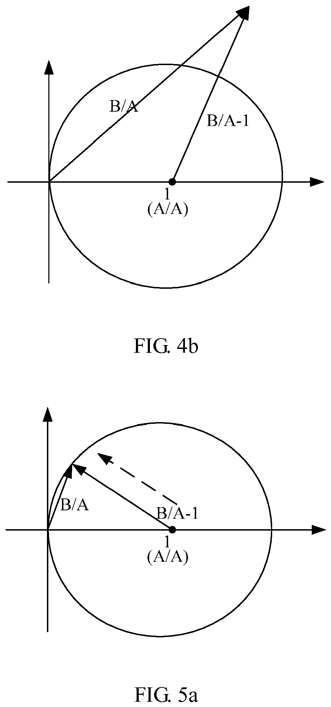

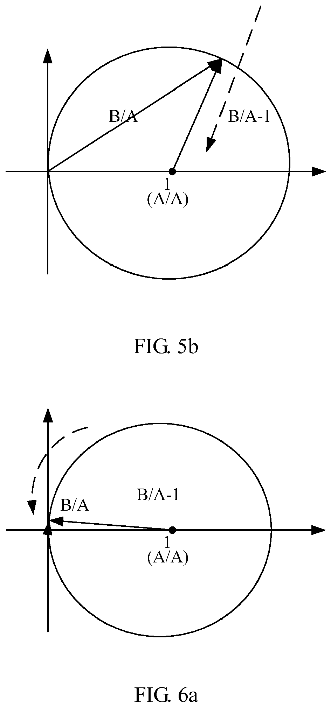

Specifically, when the cancellation module 7 is adjusted by using the control signal generated by the transceiver digital processing unit 1, an amplitude may be adjusted first so that |$B/A$ - 1| = 0, that is, the polar coordinate vector of B/A is located on the circle that is centered at (1, 0°) and with a radius of 1. FIG. 4a and FIG. 4b show a position of B/A in the polar coordinates before the adjustment. FIG. 5a and FIG. 5b show a position of B/A in the polar coordinates after the amplitude adjustment.

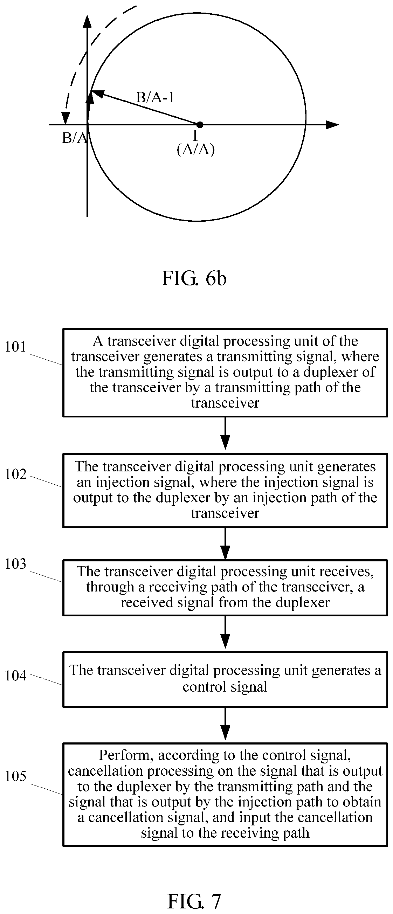

Then, the amplitude is fixed, and a phase is further adjusted, so that $B/A$ - 1 points to the origin of the polar coordinates, and in this case, B/A=0, that is B=0, as shown in FIG. 6a and FIG. 6b. Situation a and situation b in FIG. 4 to FIG. 6 respectively represent a situation in which an amplitude is adjusted from small to large and a situation in which an amplitude is adjusted from large to small; and a dotted line in FIG. 5 and FIG. 6 indicates an adjustment direction.

When adaptive adjustment is performed on a cancellation module according to the foregoing principle, a switch submodule of the cancellation module may be used to assist the adjustment. The cancellation module is first disconnected, an injection signal is injected to obtain a signal A, and then, after the cancellation module is connected, a same multi-tone signal is injected to obtain a signal B, so that B/A is acquired. Amplitude adjustment is performed on an amplitude adjustment apparatus of the cancellation module according to a position of B/A in the polar coordinates; and then phase adjustment is performed on a phase adjustment apparatus of the cancellation module.

Certainly, in different specific situations, such as in a multicarrier system, generally, sensitivity of a system is deteriorated only when transmitting remote intermodulation hits a corresponding receiving frequency band. Therefore, a cancellation module may usually stay in a disabled state (that is, be disconnected from a transmitting path or a receiving path) and be enabled when required.

Further, when adaptive adjustment is performed on the cancellation module 7, adjustment may be performed at regular time or periodically. That is, the transceiver digital processing unit 1 is further configured to periodically perform, when the cancellation module 7 is connected between the transmitting path 2 and the receiving path 5, adjustment on the cancellation module 7 by using the control signal, to generate the cancellation signal.

It can be known from the foregoing description that, in the embodiment of the present invention, an effect of interference cancellation can be adaptively detected; and further, an adjustment direction of an interference cancellation module can be determined by detecting an amplitude and phase feature of a signal obtained by receiving.

FIG.7 shows an interference cancellation method according to an embodiment of the present embodiment, where the method is applied to a transceiver and includes the following steps:

101. A transceiver digital processing unit of the transceiver generates a transmitting signal, where the transmitting signal is output to a duplexer of the transceiver by a transmitting path of the transceiver.
102. The transceiver digital processing unit generates an injection signal, where the injection signal is output to the duplexer by an injection path of the transceiver. A frequency band of the injection signal includes a frequency band of a received signal, for example, the injection signal includes a multi-tone signal.
103. The transceiver digital processing unit receives a received signal from the duplexer through a receiving path of the transceiver. It should be understood that, the signal includes transmitting intermodulation interference coupled by using a cancellation module and the duplexer that are parallel, also includes a normal received signal, and further includes an injection signal coupled by using the cancellation module and the duplexer that are parallel. Certainly, through subsequent adjustment on the cancellation module, both the coupled transmitting intermodulation interference and injection signal approach zero.
104. The transceiver digital processing unit generates a control signal, which may specifically include: when the cancellation module is connected between the transmitting path and the receiving path, generating the control signal according to a signal that is output by the receiving path and adaptively adjusting the control signal according to a value of the signal that is output by the receiving path.

105. Perform, according to the control signal, cancellation processing on the signal that is output to the duplexer by the transmitting path and the signal that is output by the injection path, to obtain a cancellation signal, and input the cancellation signal to the receiving path; which may specifically include: performing filtering on a signal that is input to the cancellation module, to obtain a signal within a frequency band of the transmitting intermodulation interference; and performing, according to control of the control signal, cancellation processing on a signal obtained by filtering, to obtain the cancellation signal, so that the cancellation signal and a transmitting intermodulation interference signal that is coupled to the receiving path by the duplexer have a same phase but opposite amplitude.

In step 104, a control signal that includes an amplitude modulation signal and a phase modulation signal may be generated, where the amplitude modulation signal and the phase modulation signal are used to perform amplitude modulation and phase modulation on the cancellation module respectively. The cancellation module includes an amplitude- and phase- modulator.

The amplitude modulation signal is used to adjust an amplitude of the amplitude and phase modulator when phase adjustment of the amplitude and phase modulator is fixed, so that a polar coordinate vector of B/A is located on a circle that is centered at (1, 0°) and with a radius of 1.

The phase modulation signal is used to: after the foregoing adjustment is performed on the amplitude of the amplitude and phase modulator, adjust a phase of the amplitude and phase modulator when amplitude adjustment of the amplitude and phase modulator is fixed, so that the polar coordinate vector of B/A approaches the origin of polar coordinates, where

$$A = h_{tx\_inject}(t) * h_{dup}(t) * h_{rx}(t),$$

and

$$B = h_{tx\_inject}(t) * h_{rx}(t) * (h_{dup}(t) + h_{canceller}(t)),$$

where
$h_{tx\_inject}(t)$ indicates a transfer function of the injection path after the injection signal is injected; $h_{rx}(t)$ indicates a transfer function of the receiving path; $h_{dup}(t)$ indicates a suppression function of the duplexer on transmitting intermodulation; and $h_{canceller}(t)$ indicates a transfer function of the cancellation module.

In addition, in order to obtain a better effect, the foregoing method may further include: continually generating the multi-tone signal, and outputting the multi-tone signal to the duplexer through the injection path of the transceiver; when signal strength of the injected multi-tone signal after accumulation is stronger than that of the received signal, generating a control signal according to a signal that is received by the transceiver digital processing unit through the receiving path; and when signal strength of the injected multi-tone signal after long-time accumulation is still smaller than that of the received signal, increasing strength of the generated multi-tone signal, and then generating a control signal according to the signal that is received by the transceiver digital processing unit through the receiving path; and performing, according to the control signal, cancellation processing on the signal that is output to the duplexer by the transmitting path and the signal that is output by the injection path, to obtain the cancellation signal.

That is, in the foregoing process, if the cancellation signal is generated normally and a duplexer works normally, a multi-tone signal cannot become a large signal by accumulation due to a function of cancellation, that is, the multi-tone signal generation is continually generated and injected to an output end of the transmitting path of the transceiver. However, after long-time accumulation, signal strength of the injected multi-tone signal is still smaller than that of the received signal received by the transceiver, and in this case, strength of the generated multi-tone signal may be improved, and the cancellation processing process is automatically adjusted according to a signal that passes the receiving path, so as to implement, by using the cancellation signal generated in cancellation processing, cancellation of transmitting intermodulation interference generated by the transmitting path. In this way, cancellation accuracy may also be increased, and a better cancellation effect may be obtained.

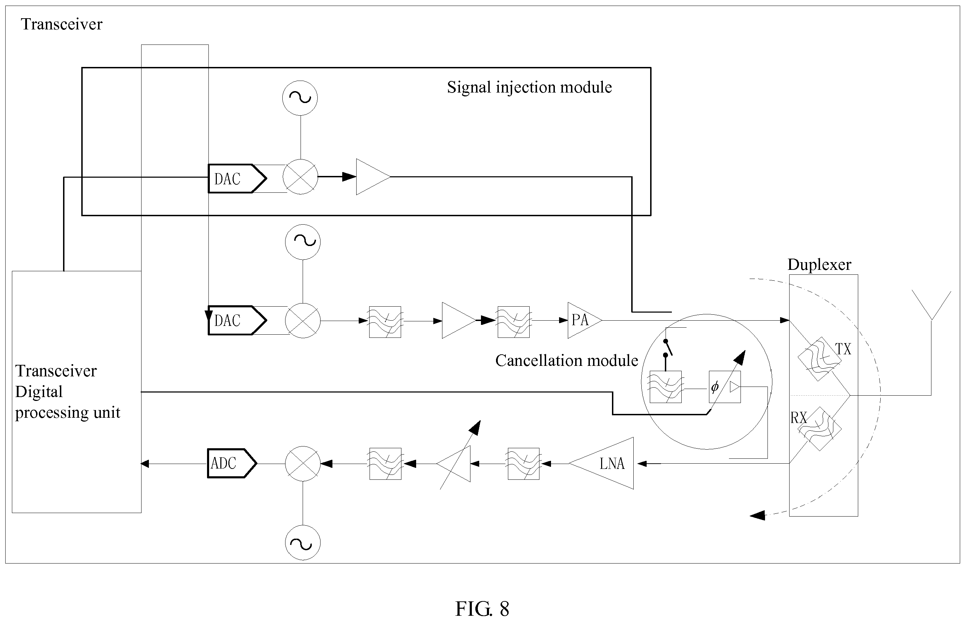

The following further describes an interference cancellation process in the present invention with reference to a specific embodiment. FIG. 8 is another schematic diagram of specific composition of a transceiver according to an embodiment of the present invention. In this embodiment, a cancellation module includes: a switch component, a filter, and an amplitude- and phase- modulator, where the amplitude- and phase- modulator performs amplitude and phase adjustment according to a signal from a transceiver digital processing unit; and the switch component may also be controlled according to the signal from the transceiver digital processing unit (a control circuit is not shown in the figure). A signal injection module may include: a DAC, an inverter, and an amplifier.

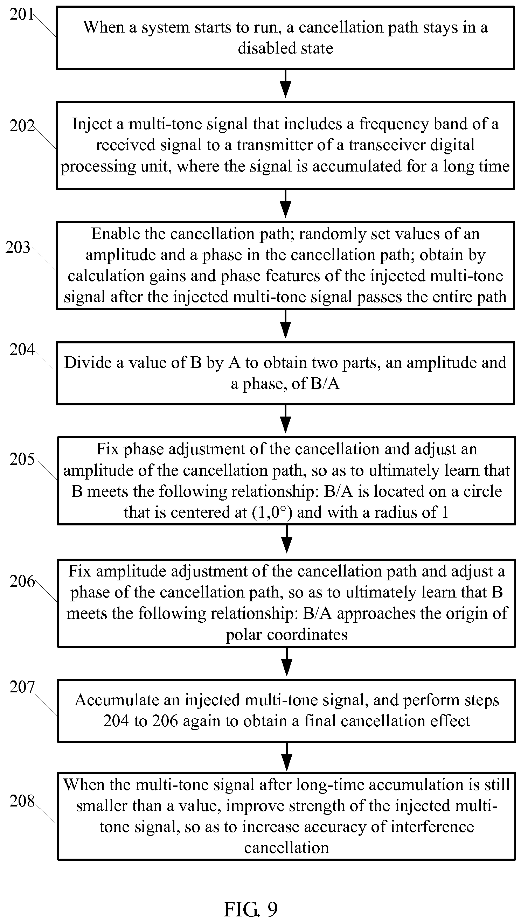

A signal injection path transmits an injection signal and injects the signal to an output end of a power amplifier in a transmitting path, that is, to an output end of the transmitting path. That is, an output end of a power amplifier injects the injection signal. For example, the injection signal may be a periodically injected signal with a frequency band that includes a frequency band of a received signal, for example, may be a multi-tone signal (which may specifically be an OFDM signal), a random signal, and the like (the following uses the multi-tone signal as an example for description). A multi-tone signal that passes a duplexer and the receiving path is collected at an output end of the receiving path. Amplitude and phase adjustment is performed on the cancellation module so as to ultimately ensure a minimum amplitude and power of the collected multi-tone signal. For specific adjustment steps, reference may be made to FIG. 9, which include the following procedures:

201. When a system starts to run, a cancellation path stays in a disabled state, that is, the cancellation module is not connected between a transmitting path and a receiving path.

202. Inject a multi-tone signal that includes a frequency band of a received signal to a transmitter of a transceiver digital processing unit, where the signal is accumulated for a long time. After the signal undergoes related accumulation for some time, a receiver of the transceiver digital processing unit obtains gains and phase features of the entire path. If the signal is set to A, $A = h_{tx\_inject}(t) * h_{dup}(t) * h_{rx}(t)$.

203. Enable the cancellation path (that is, connect the cancellation module to an output end of the transmitting path and an input end of the receiving path); randomly set values of an amplitude and a phase in the cancellation path, and similarly, obtain by calculation gains and phase features of the injected multi-tone signal after the injected multi-tone signal passes the entire path; and set the gains and phase features of the injected multi-tone signal to B, where $B = h_{tx\_inject}(t) * h_{rx}(t) * (h_{dup}(t) + h_{canceller}(t))$. For information about what each symbol represents in the formulas about A and B, reference is made to the foregoing embodiment.

204. Divide a value of B by a value of A to obtain two parts, an amplitude and a phase, of B/A, as shown in the foregoing FIG. 4a and FIG. 4b.

205. Fix phase adjustment of the cancellation path and adjust amplitude of the cancellation path so as to ultimately learn that B meets the following relationship: B/A is located on a circle that is centered at (1, 0°) and with a radius of 1, as shown in FIG. 5a and FIG. 5b. In this way, it is ensured that an amplitude response (attenuation) of the cancellation path is consistent with an amplitude response (attenuation) of the duplexer.

206. Fix amplitude adjustment of the cancellation path and adjust a phase of of the cancellation path so as to ultimately learn that B meets the following relationship: B/A approaches the origin of polar coordinates, as shown in FIG. 6a and FIG. 6b. In this way, it is ensured that a phase response of the cancellation path and a phase response of the duplexer are opposite, that is, a signal that is output by the cancellation path and a signal coupled from the transmitting path to the receiving path by the duplexer are opposite signals.

207. In order to improve a cancellation capability of the entire path, accumulation of an injected multi-tone signal may be used, that is, constantly inject a same multi-tone signal, and because of relativity of the multi-tone signal, the multi-tone signal obtains relatively large enhancement. However, because received signals that are received at different time do not have this relativity, signal strength of a received signal is not obviously increased along with this long-time accumulation. In this way, signal strength of a multi-tone signal after accumulation may be greater than that of a received signal. Then, perform steps 204 to 206 again to constantly adjust the cancellation module to obtain a better cancellation effect.

208. Because of the existence of the cancellation module, after step 207 is performed, when a same multi-tone signal is constantly injected for a long time, the multi-tone signal may not be accumulated. Therefore, when it is found that the multi-tone signal after long-time accumulation is still smaller than a value, improve strength of the injected multi-tone signal; and then perform regulation on the cancellation module according to the foregoing procedures so as to increase accuracy of interference cancellation.

In a multicarrier system, generally, sensitivity of a system is deteriorated only when transmitting remote intermodulation hits a corresponding receiving frequency band. Therefore, a cancellation module may usually stay in a disabled state and be enabled when required. In the embodiment of the present invention, a signal injection path may be provided by a multipath correction path. When bandwidth of a transmitter is wide enough, it may also be that the transmitter directly transmits a multi-tone signal of a receiver. When a cancellation path is invalid, and it is found that injecting the multi-tone signal generates no cancellation effect, the cancellation module is disabled.

In the embodiment of the present invention, a means of performing adaptive adjustment on a cancellation module by adding an injection signal to an existing transceiver. The cancellation module is located between a transmitting path and a receiving path, and automatic adjustment is performed on a cancellation effect of the cancellation module according to an injection signal received by the receiving path, thereby not only implementing adaptive cancellation of transmitting intermodulation interference, but also avoiding increasing size of a duplexer and obviously increasing size and weight of the entire transceiver.

A person of ordinary skill in the art may understand that all or a part of the processes of the methods in the foregoing embodiments may be implemented by a computer program instructing relevant hardware. The program may be stored in a computer readable storage medium. When the program runs, the processes of the methods in the foregoing embodiments are performed. The storage medium may be: a magnetic disk, an optical disc, a read-only memory (Read-Only Memory, ROM), a random access memory (Random Access Memory, RAM), or the like.

The foregoing discloses merely an exemplary embodiment of the present invention, and certainly cannot be used to limit the protection scope of the present invention which is defined by the following claims.

**Claims**

1. A transceiver, **characterized by** comprising a transceiver digital processing unit (1), a transmitting path (2), a receiving path (5), an injection path (6), a duplexer (3), and a cancellation module (7), wherein
   the transceiver digital processing unit (1) is configured to generate a transmitting signal, an injection signal, and a control signal, and obtain a received signal, wherein the control signal is used to adjust a transmission parameter of the cancellation module according to the received signal;
   the transmitting path (2) is configured to output, to the duplexer (3), the transmitting signal generated by the transceiver digital processing unit (1);
   the receiving path (5) is configured to input, to the transceiver digital processing unit (1), the received signal from the duplexer (3);
   the injection path (6) is configured to output, to the cancellation module (7) and the duplexer (3), the injection signal generated by the transceiver digital processing unit (1); and
   the cancellation module (7) is configured to perform, according to the control signal, cancellation processing on the signal that is output to the duplexer (3) by the transmitting path (2) and the signal that is output by the injection path (6), to obtain a cancellation signal, and input the cancellation signal to the receiving path (5),
   wherein the cancellation module (7) comprises a filter and an amplitude and phase modulator, wherein
   the filter is configured to perform filtering on a signal that is input to the cancellation module (7) to obtain a signal within a transmitting intermodulation interference frequency band; and
   the amplitude and phase modulator is configured to perform, according to control of the control signal, cancellation processing on a signal filtered by the filter, to obtain the cancellation signal, so that the cancellation signal and a transmitting intermodulation interference signal that is coupled to the receiving path through the duplexer (3) have a same phase but opposite amplitude,
   wherein the transceiver digital processing unit (1) comprises a control signal generating module, which is configured to: when the cancellation module (7) is connected between the transmitting path (2) and the receiving path (5), generate the control signal according to a signal that is output by the receiving path (5), and adaptively adjust the control signal according to a value of the signal that is output by the receiving path (5),
   wherein the control signal comprises an amplitude modulation signal and a phase modulation signal; the control signal generating module is configured to generate the amplitude modulation signal and the phase modulation signal; the amplitude modulation signal is used to adjust an amplitude of the amplitude and phase modulator when phase adjustment of the amplitude and phase modulator is fixed, so that a polar coordinate vector of B/A is located on a circle that is centered at (1, 0°) and with a radius of 1; and
   the phase modulation signal is used to: after the foregoing adjustment is performed on the amplitude of the amplitude and phase modulator, adjust a phase of the amplitude and phase modulator when amplitude adjustment of the amplitude and phase modulator is fixed, so that the polar coordinate vector of B/A approaches the origin of polar coordinates, wherein

$$A = h_{tx\_inject}(t) * h_{dup}(t) * h_{rx}(t),$$

and

$$B = h_{tx\_inject}(t) * h_{rx}(t) * (h_{dup}(t) + h_{canceller}(t)),$$

wherein

$h_{rx\_inject}(t)$ indicates a transfer function of the injection path (6) after the injection signal is injected; $h_{rx}(t)$ indicates a transfer function of the receiving path (5); $h_{dup}(t)$ indicates a suppression function of the duplexer (3) on transmitting intermodulation; and $h_{canceller}(t)$ indicates a transfer function of the cancellation module (7).

2. The transceiver according to claim 1, wherein a frequency band of the injection signal generated by the transceiver digital processing unit (1) comprises a frequency band of the received signal.

3. The transceiver according to claim 1, wherein the cancellation module (7) comprises a switch submodule, which is configured to: according to control of the transceiver digital processing unit (1), connect the cancellation module between the transmitting path (2) and the receiving path (5) or disconnect the cancellation module (7) from the transmitting path (2) and the receiving path (5).

4. The transceiver according to claim 1, wherein the transceiver digital processing unit (1) is further configured to: when the cancellation module (7) is connected between the transmitting path (2) and the receiving path (5), periodically adjust, by using the control signal, the cancellation module to generate the cancellation signal.

5. The transceiver according to any one of claims 1 to 4, wherein the injection signal comprises a multi-tone signal or a random signal.

6. An interference cancellation method, applied to a transceiver, **characterized by** comprising:

   generating (101), by a transceiver digital processing unit of the transceiver, a transmitting signal, wherein the transmitting signal is output to a duplexer of the transceiver by a transmitting path of the transceiver;
   generating (102), by the transceiver digital processing unit, an injection signal, wherein the injection signal is output to the duplexer by an injection path of the transceiver;
   receiving (103), by the transceiver digital processing unit, a received signal from the duplexer through a receiving path of the transceiver;
   generating (104), by the transceiver digital processing unit, a control signal; and
   performing (105), according to the control signal, cancellation processing on the signal that is output to the duplexer by the transmitting path and the signal that is output by the injection path, to obtain a cancellation signal, and inputting the cancellation signal to the receiving path,
   wherein the performing, according to the control signal, cancellation processing on the signal that is output to the duplexer by the transmitting path and the signal that is output by the injection path, to obtain the cancellation signal comprises:

      performing filtering on a signal that is input to the cancellation module, to obtain a signal within a frequency band of transmitting intermodulation interference; and
      performing, according to control of the control signal, cancellation processing on a signal obtained by filtering, to obtain the cancellation signal, so that the cancellation signal and a transmitting intermodulation interference signal that is coupled to the receiving path by the duplexer have a same phase but opposite amplitude,

   wherein the generating, by the transceiver digital processing unit, a control signal comprises:

      when the cancellation module is connected between the transmitting path and the receiving path, generating the control signal according to a signal that is output by the receiving path and adaptively adjusting the control signal according to a value of the signal that is output by the receiving path,
      wherein the control signal comprises an amplitude modulation signal and a phase modulation signal, and the cancellation module comprises an amplitude and phase modulator;
      the amplitude modulation signal is used to adjust an amplitude of the amplitude and phase modulator when phase adjustment of the amplitude and phase modulator is fixed, so that a polar coordinate vector of B/A is located on a circle that is centered at (1, 0°) and with a radius of 1; and
      the phase modulation signal is used to, after the foregoing adjustment is performed on the amplitude of the amplitude and phase modulator, adjust a phase of the amplitude and phase modulator when amplitude adjustment of the amplitude and phase modulator is fixed, so that the polar coordinate vector of B/A approaches the origin of polar coordinates, wherein

$$A = h_{tx\_inject}(t) * h_{dup}(t) * h_{rx}(t),$$

and

$$B = h_{tx\_inject}(t) * h_{rx}(t) * (h_{dup}(t) + h_{canceller}(t)),$$

wherein

$h_{tx\_inject}(t)$ indicates a transfer function of the injection path after the injection signal is injected; $h_{rx}(t)$ indicates a transfer function of the receiving path; $h_{dup}(t)$ indicates a suppression function of the duplexer on transmitting intermodulation; and $h_{canceller}(t)$ indicates a transfer function of the cancellation module.

7. The method according to claim 6, wherein the injection signal is a multi-tone signal, and the method further comprises:

continually generating the multi-tone signal, and outputting the multi-tone signal to the duplexer through the injection path of the transceiver;
when signal strength of the injected multi-tone signal after accumulation is stronger than that of the received signal, generating a control signal according to a signal that is received by the transceiver digital processing unit through the receiving path; and when signal strength of the injected multi-tone signal after long-time accumulation is still smaller than that of the received signal, increasing strength of the generated multi-tone signal, and then generating a control signal according to the signal that is received by the transceiver digital processing unit through the receiving path; and
performing, according to the control signal, cancellation processing on the signal that is output to the duplexer by the transmitting path and the signal that is output by the injection path, to obtain the cancellation signal.

**Patentansprüche**

1. Sender-Empfänger, **dadurch gekennzeichnet, dass** er eine digitale Sender-Empfänger-Verarbeitungseinheit (1), einen Sendepfad (2), einen Empfangspfad (5), einen Injektionspfad (6), einen Duplexer (3) und ein Unterdrückungsmodul (7) umfasst, wobei
die digitale Sender-Empfänger-Verarbeitungseinheit (1) dafür ausgelegt ist, ein Sendesignal, ein Injektionssignal und ein Steuersignal zu erzeugen und ein empfangenes Signal zu erhalten, wobei das Steuersignal verwendet wird, um einen Übertragungsparameter des Unterdrückungsmoduls gemäß dem empfangenen Signal anzupassen;
der Sendepfad (2) dafür ausgelegt ist, an den Duplexer (3) das Sendesignal auszugeben, das von der digitalen Sender-Empfänger-Verarbeitungseinheit (1) erzeugt wurde;
der Empfangspfad (5) dafür ausgelegt ist, in die digitale Sender-Empfänger-Verarbeitungseinheit (1) das empfangene Signal vom Duplexer (3) einzugeben;
der Injektionspfad (6) dafür ausgelegt ist, an das Unterdrückungsmodul (7) und den Duplexer (3) das von der digitalen Sender-Empfänger-Verarbeitungseinheit (1) erzeugte Injektionssignal auszugeben; und
das Unterdrückungsmodul (7) dafür ausgelegt ist, gemäß dem Steuersignal eine Unterdrückungsverarbeitung des Signals, welches an den Duplexer (3) durch den Sendepfad (2) ausgegeben wird, und des Signals, welches durch den Injektionspfad (6) ausgegeben wird, durchzuführen, um ein Unterdrückungssignal zu gewinnen und das Unterdrückungssignal in den Empfangsfad (5) einzugeben,
wobei das Unterdrückungsmodul (7) ein Filter und einen Amplituden- und Phasenmodulator umfasst, wobei
das Filter dafür ausgelegt ist, eine Filterung eines Signals durchzuführen, welches in das Unterdrückungsmodul (7) eingegeben wird, um ein Signal innerhalb eines Übertragungs-Intermodulationsinterferenz-Frequenzbandes zu gewinnen; und
der Amplituden- und Phasenmodulator dafür ausgelegt ist, gemäß einer Steuerung durch das Steuersignal eine Unterdrückungsverarbeitung eines durch das Filter gefilterten Signals durchzuführen, um das Unterdrückungssignal zu gewinnen, so dass das Unterdrückungssignal und ein Übertragungs-Intermodulationsinterferenzsignal, welches über den Duplexer (3) in den Empfangspfad gekoppelt ist, dieselbe Phase, jedoch entgegengesetzte Amplituden aufweisen,
wobei die digitale Sender-Empfänger-Verarbeitungseinheit (1) ein Steuersignal-Erzeugungsmodul umfasst, welches dafür ausgelegt ist, wenn das Unterdrückungsmodul (7) zwischen den Sendepfad (2) und den Empfangspfad (5) geschaltet ist, das Steuersignal gemäß einem Signal zu erzeugen, welches vom Empfangspfad (5) ausgegeben wird, und das Steuersignal gemäß einem Wert des Signals, welches vom Empfangspfad (5) ausgegeben wird, adaptiv anzupassen,

wobei das Steuersignal ein Amplitudenmodulationssignal und ein Phasenmodulationssignal umfasst; das Steuersignal-Erzeugungsmodul dafür ausgelegt ist, das Amplitudenmodulationssignal und das Phasenmodulationssignal zu erzeugen; das Amplitudenmodulationssignal verwendet wird, um eine Amplitude des Amplituden- und Phasenmodulators anzupassen, wenn die Phasenanpassung des Amplituden- und Phasenmodulators fest ist, so dass sich ein Polarkoordinatenvektor von B/A auf einem Kreis befindet, welcher um (1, 0°) zentriert ist und einen Radius 1 hat; und

das Phasenmodulationssignal verwendet wird, um, nachdem die vorhergehende Anpassung der Amplitude des Amplituden- und Phasenmodulators durchgeführt wurde, eine Phase des Amplituden- und Phasenmodulators anzupassen, wenn die Amplitudenanpassung des Amplituden- und Phasenmodulators fest ist, so dass sich der Polarkoordinatenvektor von B/A dem Polarkoordinatenursprung nähert, wobei

$$A = h_{tx\_inject}(t) * h_{dup}(t) * h_{rx}(t)$$

und

$$B = h_{tx\_inject}(t) * h_{rx}(t) * (h_{dup}(t) + h_{canceller}(t)),$$

wobei

$h_{tx\_inject}(t)$ eine Übertragungsfunktion des Injektionspfades (6) bezeichnet, nachdem das Injektionssignal injiziert wurde; $h_{rx}(t)$ eine Übertragungsfunktion des Empfangspfades (5) bezeichnet; $h_{dup}(t)$ eine Unterdrückungsfunktion des Duplexers (3) bei Übertragungs-Intermodulation bezeichnet; und $h_{canceller}(t)$ eine Übertragungsfunktion des Unterdrückungsmoduls (7) bezeichnet.

2. Sender-Empfänger nach Anspruch 1, wobei ein Frequenzband des von der digitalen Sender-Empfänger-Verarbeitungseinheit (1) erzeugten Injektionssignals ein Frequenzband des empfangenen Signals umfasst.

3. Sender-Empfänger nach Anspruch 1, wobei das Unterdrückungsmodul (7) ein Schalter-Submodul umfasst, welches dafür ausgelegt ist, gemäß einer Steuerung durch die digitale Sender-Empfänger-Verarbeitungseinheit (1) das Unterdrückungsmodul zwischen den Sendepfad (2) und den Empfangspfad (5) zu schalten oder das Unterdrückungsmodul (7) vom Sendepfad (2) und vom Empfangsfad (5) zu trennen.

4. Sender-Empfänger nach Anspruch 1, wobei die digitale Sender-Empfänger-Verarbeitungseinheit (1) ferner dafür ausgelegt ist, wenn das Unterdrückungsmodul (7) zwischen den Sendepfad (2) und den Empfangspfad (5) geschaltet ist, das Unterdrückungsmodul unter Verwendung des Steuersignals periodisch anzupassen, um das Unterdrückungssignal zu erzeugen.

5. Sender-Empfänger nach einem der Ansprüche 1 bis 4, wobei das Injektionssignal ein Mehrtonsignal oder ein zufälliges Signal umfasst.

6. Verfahren zur Interferenzunterdrückung, das auf einen Sender-Empfänger angewendet wird, **dadurch gekennzeichnet, dass** es umfasst:

Erzeugen (101), durch eine digitale Sender-Empfänger-Verarbeitungseinheit des Sender-Empfängers, eines Sendesignals, wobei das Sendesignal durch einen Sendepfad des Sender-Empfängers an einen Duplexer des Sender-Empfängers ausgegeben wird;
Erzeugen (102), durch die digitale Sender-Empfänger-Verarbeitungseinheit, eines Injektionssignals, wobei das Injektionssignal durch einen Injektionspfad des Sender-Empfängers an den Duplexer ausgegeben wird;
Empfangen (103), durch die digitale Sender-Empfänger-Verarbeitungseinheit, eines empfangenen Signals vom Duplexer durch einen Empfangspfad des Sender-Empfängers;
Erzeugen (104), durch die digitale Sender-Empfänger-Verarbeitungseinheit, eines Steuersignals; und
Durchführen (105), gemäß dem Steuersignal, einer Unterdrückungsverarbeitung des Signals, welches an den Duplexer durch den Sendepfad ausgegeben wird, und des Signals, welches durch den Injektionspfad ausgegeben wird, um ein Unterdrückungssignal zu gewinnen, und Eingeben des Unterdrückungssignals in den Empfangsfad ,
wobei das Durchführen, gemäß dem Steuersignal, der Unterdrückungsverarbeitung des Signals, welches an den Duplexer durch den Sendepfad ausgegeben wird, und des Signals, welches durch den Injektionspfad ausgegeben wird, um das Unterdrückungssignal zu gewinnen, umfasst:

Durchführen einer Filterung eines Signals, welches in das Unterdrückungsmodul eingegeben wird, um ein Signal innerhalb eines Frequenzbandes von Übertragungs-Intermodulationsinterferenz zu gewinnen; und Durchführen, gemäß einer Steuerung durch das Steuersignal, einer Unterdrückungsverarbeitung eines durch Filtern gewonnenen Signals, um das Unterdrückungssignal zu gewinnen, so dass das Unterdrückungssignal und ein Übertragungs-Intermodulationsinterferenzsignal, welches durch den Duplexer in den Empfangspfad gekoppelt ist, dieselbe Phase, jedoch entgegengesetzte Amplituden aufweisen,

wobei das Erzeugen, durch die digitale Sender-Empfänger-Verarbeitungseinheit, eines Steuersignals umfasst:

wenn das Unterdrückungsmodul zwischen den Sendepfad und den Empfangspfad geschaltet ist, Erzeugen des Steuersignals gemäß einem Signal, welches vom Empfangspfad ausgegeben wird, und adaptives Anpassen des Steuersignals gemäß einem Wert des Signals, welches vom Empfangspfad ausgegeben wird,
wobei das Steuersignal ein Amplitudenmodulationssignal und ein Phasenmodulationssignal umfasst und das Unterdrückungsmodul einen Amplituden- und Phasenmodulator umfasst;
das Amplitudenmodulationssignal verwendet wird, um eine Amplitude des Amplituden- und Phasenmodulators anzupassen, wenn die Phasenanpassung des Amplituden- und Phasenmodulators fest ist, so dass sich ein Polarkoordinatenvektor von B/A auf einem Kreis befindet, welcher um (1, 0°) zentriert ist und einen Radius 1 hat; und
das Phasenmodulationssignal verwendet wird, um, nachdem die vorhergehende Anpassung der Amplitude des Amplituden- und Phasenmodulators durchgeführt wurde, eine Phase des Amplituden- und Phasenmodulators anzupassen, wenn die Amplitudenanpassung des Amplituden- und Phasenmodulators fest ist, so dass sich der Polarkoordinatenvektor von B/A dem Polarkoordinatenursprung nähert, wobei

$$A = h_{tx\_inject}(t) * h_{dup}(t) * h_{rx}(t)$$

und

$$B = h_{tx\_inject}(t) * h_{rx}(t) * (h_{dup}(t) + h_{canceller}(t)),$$

wobei
$h_{tx\_inject}(t)$ eine Übertragungsfunktion des Injektionspfades bezeichnet, nachdem das Injektionssignal injiziert wurde; $h_{rx}(t)$ eine Übertragungsfunktion des Empfangspfades bezeichnet; $h_{dup}(t)$ eine Unterdrückungsfunktion des Duplexers bei Übertragungs-Intermodulation bezeichnet; und $h_{canceller}(t)$ eine Übertragungsfunktion des Unterdrückungsmoduls bezeichnet.

7. Verfahren nach Anspruch 6, wobei das Injektionssignal ein Mehrtonsignal ist und das Verfahren ferner umfasst:

kontinuierliches Erzeugen des Mehrtonsignals und Ausgeben des Mehrtonsignals an den Duplexer über den Injektionspfad des Sender-Empfängers;
wenn die Signalstärke des injizierten Mehrtonsignals nach Akkumulation stärker als diejenige des empfangenen Signals ist, Erzeugen eines Steuersignals gemäß einem Signal, welches durch die digitale Sender-Empfänger-Verarbeitungseinheit über den Empfangspfad empfangen wird; und wenn die Signalstärke des injizierten Mehrtonsignals nach Akkumulation über lange Zeit noch immer kleiner als diejenige des empfangenen Signals ist, Erhöhen der Stärke des erzeugten Mehrtonsignals und danach Erzeugen eines Steuersignals gemäß dem Signal, welches durch die digitale Sender-Empfänger-Verarbeitungseinheit über den Empfangspfad empfangen wird; und
Durchführen, gemäß dem Steuersignal, einer Unterdrückungsverarbeitung des Signals, welches an den Duplexer durch den Sendepfad ausgegeben wird, und des Signals, welches durch den Injektionspfad ausgegeben wird, um das Unterdrückungssignal zu gewinnen.

**Revendications**

1. Émetteur-récepteur, l'émetteur-récepteur étant **caractérisé en ce qu'**il comprend une unité de traitement numérique (1) d'émetteur-récepteur, une voie d'émission (2), une voie de réception (5), une voie d'injection (6), un duplexeur (3) et un module d'annulation (7),

   l'unité de traitement numérique (1) d'émetteur-récepteur étant configurée pour générer un signal d'émission, un signal d'injection et un signal de commande, et obtenir un signal reçu, le signal de commande servant à ajuster un paramètre d'émission du module d'annulation selon le signal reçu ;

   la voie d'émission (2) étant configurée pour délivrer au duplexeur (3) le signal d'émission généré par l'unité de traitement numérique (1) d'émetteur-récepteur ;

   la voie de réception (5) étant configurée pour appliquer à l'entrée de l'unité de traitement numérique (1) d'émetteur-récepteur le signal reçu provenant du duplexeur (3) ;

   la voie d'injection (6) étant configurée pour délivrer au module d'annulation (7) et au duplexeur (3) le signal d'injection généré par l'unité de traitement numérique (1) d'émetteur-récepteur ; et

   le module d'annulation (7) étant configuré pour effectuer, selon le signal de commande, un traitement d'annulation sur le signal délivré au duplexeur (3) par la voie d'émission (2) et sur le signal délivré par la voie d'injection (6) aux fins d'obtenir un signal d'annulation, et appliquer le signal d'annulation à l'entrée de la voie de réception (5),

   le module d'annulation (7) comprenant un filtre et un modulateur d'amplitude et de phase,

   le filtre étant configuré pour effectuer un filtrage sur un signal appliqué à l'entrée du module d'annulation (7) aux fins d'obtenir un signal s'inscrivant dans une bande de fréquences d'interférence d'intermodulation d'émission ; et

   le modulateur d'amplitude et de phase étant configuré pour effectuer, selon une commande du signal de commande, un traitement d'annulation sur un signal filtré par le filtre aux fins d'obtenir le signal d'annulation, de sorte que le signal d'annulation et un signal d'interférence d'intermodulation d'émission couplé à la voie de réception via le duplexeur (3) présentent une même phase mais une amplitude opposée,

   l'unité de traitement numérique (1) d'émetteur-récepteur comprenant un module de génération de signal de commande, configuré pour : lorsque le module d'annulation (7) est connecté entre la voie d'émission (2) et la voie de réception (5), générer le signal de commande selon un signal délivré par la voie de réception (5), et ajuster de façon adaptative le signal de commande selon une valeur du signal délivré par la voie de réception (5),

   le signal de commande comprenant un signal de modulation d'amplitude et un signal de modulation de phase ; le module de génération de signal de commande étant configuré pour générer le signal de modulation d'amplitude et le signal de modulation de phase ;

   le signal de modulation d'amplitude servant à ajuster une amplitude du modulateur d'amplitude et de phase lorsque l'ajustement de phase du modulateur d'amplitude et de phase est fixé, de sorte qu'un vecteur de coordonnées polaires de B/A se trouve sur un cercle centré en (1, 0°) et d'un rayon de 1 ; et

   le signal de modulation de phase servant à : une fois l'ajustement susmentionné effectué sur l'amplitude du modulateur d'amplitude et de phase, ajuster une phase du modulateur d'amplitude et de phase lorsque l'ajustement d'amplitude du modulateur d'amplitude et de phase est fixé, de sorte que le vecteur de coordonnées polaires de B/A s'approche de l'origine de coordonnées polaires,

$$A = h_{tx\_inject}(t) * h_{dup}(t) * h_{rx}(t),$$

et

$$B = h_{tx\_inject}(t) * h_{rx}(t) * (h_{dup}(t) + h_{canceller}(t)),$$

$h_{tx\_inject}(t)$ indiquant une fonction de transfert de la voie d'injection (6) suite à l'injection du signal d'injection ; $h_{rx}(t)$ indiquant une fonction de transfert de la voie de réception (5) ; $h_{dup}(t)$ indiquant une fonction de suppression du duplexeur (3) sur l'intermodulation d'émission ; et $h_{canceller}(t)$ indiquant une fonction de transfert du module d'annulation (7).

2. Émetteur-récepteur selon la revendication 1, dans lequel une bande de fréquences du signal d'injection généré par l'unité de traitement numérique (1) d'émetteur-récepteur comprend une bande de fréquences du signal reçu.

3. Émetteur-récepteur selon la revendication 1, dans lequel le module d'annulation (7) comprend un sous-module commutateur, configuré pour : selon une commande de l'unité de traitement numérique (1) d'émetteur-récepteur, connecter le module d'annulation entre la voie d'émission (2) et la voie de réception (5) ou déconnecter le module d'annulation (7) de la voie d'émission (2) et de la voie de réception (5).

**4.** Émetteur-récepteur selon la revendication 1, dans lequel l'unité de traitement numérique (1) d'émetteur-récepteur est configurée en outre pour : lorsque le module d'annulation (7) est connecté entre la voie d'émission (2) et la voie de réception (5), ajuster périodiquement, au moyen du signal de commande, le module d'annulation aux fins de générer le signal d'annulation.

**5.** Émetteur-récepteur selon l'une quelconque des revendications 1 à 4, dans lequel le signal d'injection comprend un signal multi-tonalité ou un signal aléatoire.

**6.** Procédé d'annulation d'interférence, s'appliquant à un émetteur-récepteur, le procédé étant **caractérisé en ce qu'**il comprend les étapes consistant à :

générer (101), par une unité de traitement numérique d'émetteur-récepteur de l'émetteur-récepteur, un signal d'émission, le signal d'émission étant délivré à un duplexeur de l'émetteur-récepteur par une voie d'émission de l'émetteur-récepteur ;
générer (102), par l'unité de traitement numérique d'émetteur-récepteur, un signal d'injection, le signal d'injection étant délivré au duplexeur par une voie d'injection de l'émetteur-récepteur ;
recevoir (103), par l'unité de traitement numérique d'émetteur-récepteur, un signal reçu provenant du duplexeur via une voie de réception de l'émetteur-récepteur ;
générer (104), par l'unité de traitement numérique d'émetteur-récepteur, un signal de commande ; et
effectuer (105), selon le signal de commande, un traitement d'annulation sur le signal délivré au duplexeur par la voie d'émission et sur le signal délivré par la voie d'injection aux fins d'obtenir un signal d'annulation, et appliquer le signal d'annulation à l'entrée de la voie de réception,
l'étape consistant à effectuer, selon le signal de commande, un traitement d'annulation sur le signal délivré au duplexeur par la voie d'émission et sur le signal délivré par la voie d'injection aux fins d'obtenir un signal d'annulation comprenant les étapes consistant à :

effectuer un filtrage sur un signal appliqué à l'entrée du module d'annulation aux fins d'obtenir un signal s'inscrivant dans une bande de fréquences d'interférence d'intermodulation d'émission ; et
effectuer, selon une commande du signal de commande, un traitement d'annulation sur un signal obtenu par filtrage aux fins d'obtenir le signal d'annulation, de sorte que le signal d'annulation et un signal d'interférence d'intermodulation d'émission couplé à la voie de réception par le duplexeur présentent une même phase mais une amplitude opposée,

l'étape consistant à générer, par l'unité de traitement numérique d'émetteur-récepteur, un signal de commande comprenant l'étape consistant à :

lorsque le module d'annulation est connecté entre la voie d'émission et la voie de réception, générer le signal de commande selon un signal délivré par la voie de réception, et ajuster de façon adaptative le signal de commande selon une valeur du signal délivré par la voie de réception,
le signal de commande comprenant un signal de modulation d'amplitude et un signal de modulation de phase, et le module d'annulation comprenant un modulateur d'amplitude et de phase ;
le signal de modulation d'amplitude servant à ajuster une amplitude du modulateur d'amplitude et de phase lorsque l'ajustement de phase du modulateur d'amplitude et
de phase est fixé, de sorte qu'un vecteur de coordonnées polaires de B/A se trouve sur un cercle centré en (1, 0°) et d'un rayon de 1 ; et
le signal de modulation de phase servant à, une fois l'ajustement susmentionné effectué sur l'amplitude du modulateur d'amplitude et de phase, ajuster une phase du modulateur d'amplitude et de phase lorsque l'ajustement d'amplitude du modulateur d'amplitude et de phase est fixé, de sorte que le vecteur de coordonnées polaires de B/A s'approche de l'origine de coordonnées polaires,

$$A = h_{tx\_inject}(t) * h_{dup}(t) * h_{rx}(t),$$

et

$$B = h_{tx\_inject}(t) * h_{rx}(t) * (h_{dup}(t) + h_{canceller}(t)),$$

$h_{tx\_inject}(t)$ indiquant une fonction de transfert de la voie d'injection suite à l'injection du signal d'injection ; $h_{rx}(t)$ indiquant une fonction de transfert de la voie de réception ; $h_{dup}(t)$ indiquant une fonction de suppression du duplexeur sur l'intermodulation d'émission ; et $h_{canceller}(t)$ indiquant une fonction de transfert du module d'annulation.

7. Procédé selon la revendication 6, dans lequel le signal d'injection est un signal multi-tonalité, et lequel procédé comprend en outre les étapes consistant à :

générer en continu le signal multi-tonalité, et délivrer le signal multi-tonalité au duplexeur via la voie d'injection de l'émetteur-récepteur ;
lorsque l'intensité de signal du signal multi-tonalité injecté après cumul est plus forte que celle du signal reçu, générer un signal de commande selon un signal reçu par l'unité de traitement numérique d'émetteur-récepteur via la voie de réception ; et,
lorsque l'intensité de signal du signal multi-tonalité injecté après cumul prolongé continue d'être plus faible que celle du signal reçu, augmenter l'intensité du signal multi-tonalité généré puis générer un signal de commande selon le signal reçu par l'unité de traitement numérique d'émetteur-récepteur via la voie de réception ; et
effectuer, selon le signal de commande, un traitement d'annulation sur le signal délivré au duplexeur par la voie d'émission et sur le signal délivré par la voie d'injection aux fins d'obtenir le signal d'annulation.

FIG. 1

FIG. 2

FIG. 3

FIG. 4a

FIG. 4b

FIG. 5a

FIG. 5b

FIG. 6a

FIG. 6b

101 — A transceiver digital processing unit of the transceiver generates a transmitting signal, where the transmitting signal is output to a duplexer of the transceiver by a transmitting path of the transceiver

102 — The transceiver digital processing unit generates an injection signal, where the injection signal is output to the duplexer by an injection path of the transceiver

103 — The transceiver digital processing unit receives, through a receiving path of the transceiver, a received signal from the duplexer

104 — The transceiver digital processing unit generates a control signal

105 — Perform, according to the control signal, cancellation processing on the signal that is output to the duplexer by the transmitting path and the signal that is output by the injection path to obtain a cancellation signal, and input the cancellation signal to the receiving path

FIG. 7

FIG. 8

201 — When a system starts to run, a cancellation path stays in a disabled state

202 — Inject a multi-tone signal that includes a frequency band of a received signal to a transmitter of a transceiver digital processing unit, where the signal is accumulated for a long time

203 — Enable the cancellation path; randomly set values of an amplitude and a phase in the cancellation path; obtain by calculation gains and phase features of the injected multi-tone signal after the injected multi-tone signal passes the entire path

204 — Divide a value of B by A to obtain two parts, an amplitude and a phase, of B/A

205 — Fix phase adjustment of the cancellation and adjust an amplitude of the cancellation path, so as to ultimately learn that B meets the following relationship: B/A is located on a circle that is centered at (1,0°) and with a radius of 1

206 — Fix amplitude adjustment of the cancellation path and adjust a phase of the cancellation path, so as to ultimately learn that B meets the following relationship: B/A approaches the origin of polar coordinates

207 — Accumulate an injected multi-tone signal, and perform steps 204 to 206 again to obtain a final cancellation effect

208 — When the multi-tone signal after long-time accumulation is still smaller than a value, improve strength of the injected multi-tone signal, so as to increase accuracy of interference cancellation

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050226353 A1
- EP 1813030 A0

- US 20040198295 A1